Europäisches Patentamt

European Patent Office

Office européen des brevets

(11) Veröffentlichungsnummer: **0 477 651 A1**

# (12) EUROPÄISCHE PATENTANMELDUNG

(21) Anmeldenummer: **91115292.4**

(22) Anmeldetag: **10.09.91**

(51) Int. Cl.5: **H04Q 1/14**

(30) Priorität: **28.09.90 DE 9013646 U**

(43) Veröffentlichungstag der Anmeldung:
**01.04.92 Patentblatt 92/14**

(84) Benannte Vertragsstaaten:
**BE CH DE FR GB IT LI SE**

(71) Anmelder: **SIEMENS AKTIENGESELLSCHAFT**
**Wittelsbacherplatz 2**
**W-8000 München 2(DE)**

(72) Erfinder: **Knoll, Rudolf, Dipl.-Ing.**
**Schwarzweiherweg 2**
**W-8137 Berg 3(DE)**

(54) Verteilerleiste für Telekommunikationsanlagen zur Verbindung von ankommenden und abgehenden Leitungsadern.

(57) Die Verteilerleiste besteht aus einem Unterteilgehäuse und einem mit ihm mechanisch verbundenen Kontaktteilgehäuse, das in entsprechenden Aufnahmekammern die Kontaktteile der den Leitungsadern zugehörigen Kontakte enthält. Die mechanische Verbindung der Gehäuseteile erfolgt mit Hilfe von mehreren, in einer Reihe angeordneten Rastelementen. Es sind an den stirnseitigen Begrenzungswandflächen Führungselemente vorhanden, die an die daran angepaßte Gegenform beim Zusammenbau eingreifen. Damit wird beim Zusammenfügen der beiden Gehäuseteile, z. B. bei der Verwendung von sogenannten Nut- und Federelementen, eine exakte Führung des einzubringenden Kontaktteilgehäuses und damit eine gesicherte Lage dieses Gehäuses bezüglich der Rastelemente bewirkt. Diese Vorzentrierung sichert zudem den Zusammenhalt der beiden Gehäuseteile, insbesondere dann, wenn solche Rastelemente ausschließlich auf einer Längsseite vorhanden sind.

FIG 1

EP 0 477 651 A1

Die Erfindung betrifft eine Verteilerleiste zur Verbindung von Leitungsadern in einer Telekommunikationsanlage, insbesondere in einer Nebenstellenanlage, die aus einem Unterteilgehäuse und einem mit ihm mechanisch verbundenen Kontaktteilgehäuse, in dem die aus getrennten Kontaktteilen bestehenden Schalt- und/oder Trennkontakte in entsprechenden Kammern in zumindest einer reihenförmiger Anordnung eingebracht sind, zusammengefügt ist.

Zum lötfreien Anschluß elektrischer Leitungsadern sind die in einer solchen Verteilerleiste enthaltenen Kontaktteile mit Schneidklemmen versehen. Die Kontaktteile können derart eingebracht sein, daß ihre Schneidklemmen in die gleiche Richtung weisen. Es kann aber auch vorgesehen werden, daß diejenigen Schneidklemmen die für die Rangierleitungen vorgesehen sind an der Vorderseite der Leiste liegen und die in der Regel in ihrer Belegung selten zu ändernden systemseitigen Schneidklemmen auf der Rückseite der Leiste angeordnet sind. Aus Gründen einer kostengünstigen Herstellung der Verteilerleiste wird deren Teilung in mindestens zwei getrennte Gehäuseteile vorgenommen, die dann zu der in einem Aufnahmegestell unterzubringenden bzw. an einem Trägerteil zu befestigenden Verteilerleiste zusammengefügt werden.

Es ist die Aufgabe der Erfindung, das Zusammenfügen der genannten Gehäuseteile zu vereinfachen. Dies wird dadurch erreicht, daß bei einer mit Hilfe von mehreren in mindestens einer Reihe in Längsrichtung angeordneten Rastelementen - die beim Zusammenfügen von Unterteilgehäuse und Kontaktteilgehäuse mit entsprechenden, am jeweils anderen Gehäuseteil vorgesehenen Partnerelementen verrasten - erfolgenden mechanischen Verbindung das Unterteilgehäuse in einem der Länge des Kontaktteilgehäuses entsprechenden Abstand senkrecht zur Längsrichtung verlaufende stirnseitige Begrenzungswandflächen aufweist, an denen einstökkig mit ihnen verbundene und sich in Zusammenfügungsrichtung erstreckende Führungselemente vorhanden sind, daß an den stirnseitigen Begrenzungswandflächen des Kontaktteilgehäuses selbst jeweils die an diese Führungselemente angepaßte Gegenform vorgesehen ist, daß das jeweils mit der Gegenform in Eingriff gebrachte Führungselement bei der zum Zwecke des Zusammenfügens vorgenommenen relativen Verschiebebewegung der beiden Gehäuseteile zueinander eine gesicherte Lage des Kontaktteilgehäuses bezüglich der Rastelemente bewirkt.

Durch die in einfacher Weise eine Vorzentrierung ermöglichenden Führungselemente wird bei der Montage der Verteilerleiste ein lagegerechtes sicheres Einrasten der Rastelemente ermöglicht, da beim Zusammenfügen zwangsweise eine genaue Ausrichtung des Kontaktteilgehäuses besteht. Durch die Führungselemente wird nach dem Zusammenfügen der beiden Gehäuseteile gleichzeitig eine genaue Lagefixierung vorgenommen. Eine solche zusätzliche Halterungsfunktion ist insbesondere bei Verwendung von einseitig angeordneten Rastelementen von Vorteil. Diese einreihige Anordnung der Rastelemente erlaubt es, die Verteilerleiste besonders schmal auszubilden. Die Sicherung der richtigen Position der Gehäuseteile zueinander auch im gebrauchsfertig montierten Zustand ist auch beim Aufsetzen eines Prüfadapters von Vorteil, da dessen Prüfstifte die Kontaktteile exakt kontaktieren müssen.

Eine für die erfindungsgemäße Vorzentrierung besonders geeignete Ausführung besteht gemäß einer Weiterbildung der Erfindung darin, daß an den quer zur Längsrichtung ausgerichteten Begrenzungswandflächen des Unterteilgehäuses innenseitig senkrecht zu der Bodenfläche dieses Unterteilgehäuses verlaufende Rippen vorgesehen sind. An der ihr jeweils zugewandten Begrenzungswandfläche des anzubringenden Kontaktteilgehäuses ist als Gegenform ein an diese Rippen angepaßter Einschnitt vorhanden. Mit dieser allgemeinen als Nut- und Federführung bezeichneten Lagesicherung ist die Leistenmontage insbesondere bei einseitig angeordneten Rastelementen problemlos möglich.

Eine besonders stabile Lage des anzubringenden Unterteilgehäuses wird gemäß einer Weiterbildung der Erfindung dadurch erreicht, daß die an den sich gegenüberliegenden Begrenzungswandflächen vorhandenen Rippen und in gleicher Weise die Lage der daran angepaßten Gegenformen in gegeneinander versetzten Ebenen angeordnet sind.

Im folgenden wird die Erfindung anhand eines in den Zeichnungen dargestellten Ausführungsbeispiels näher erläutert.

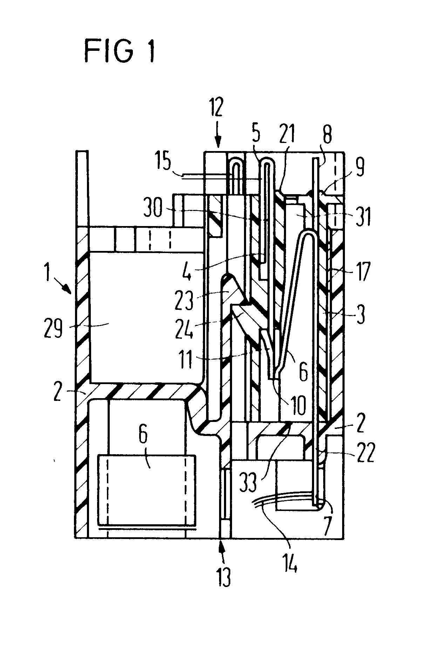

Figur 1     zeigt einen Querschnitt durch eine Verteilerleiste mit Kontaktteilen

Figur 2     zeigt eine verkleinerte Draufsicht auf die Verteilerleiste nach Figur 1 und

Figur 3     eine Seitenansicht nach Figur 2.

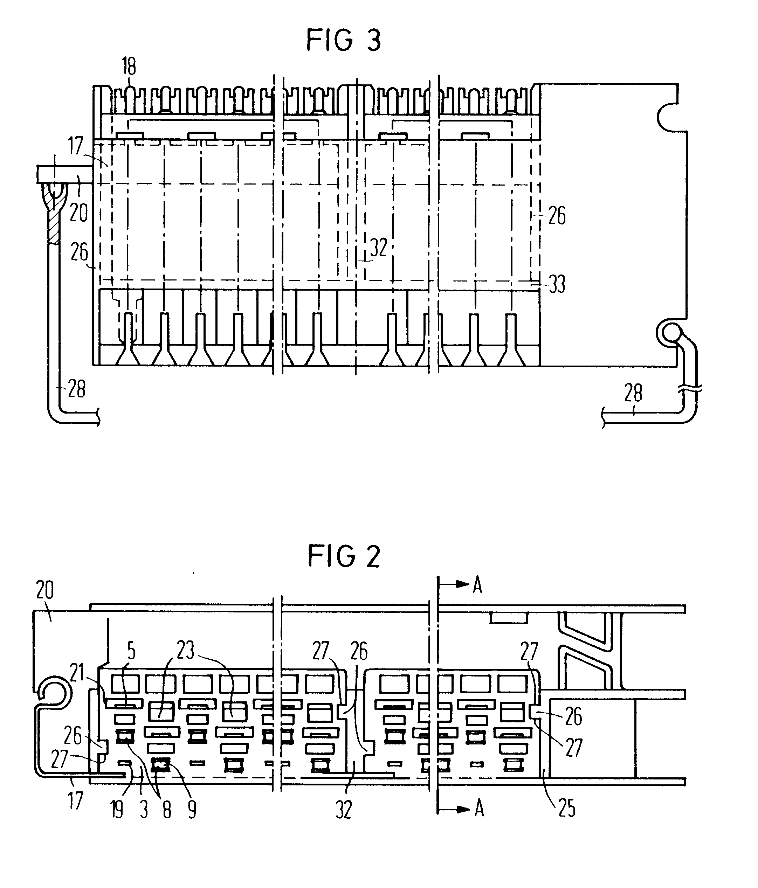

Die Verteilerleiste 1 setzt sich aus dem Kontaktteilgeäuse 3, das die Kontaktteile 4 und 6 in mehrfacher Anordnung enthält und aus einem Unterteilgehäuse 2 zusammen. Eine Mehrzahl solcher Verteilerleisten können beispielsweise längsseitig aneinandergereiht mit einem entsprechenden Trägerteil mechanisch verbunden sein. Dieses Trägerteil 28 ist in der Figur 3 angedeutet. Die Kontaktteile 4 und 6 sind in entsprechenden Aufnahmekammern 30 bzw. 31 des Kontaktteilgehäuses 3 eingesetzt und darin beispielsweise mittels eines abgebogenen Verriegelunglappens in bekannter Weise gehalten. Für das Kontaktteil 4, das sich im wesentlichen geradlinig zur Rückseite 13 der Verteilerleiste erstreckt ist z. B. ein federnd abgespreizter Rastlappen 11 vorhanden, der einen Absatz des Unterteilgehäuses hintergreift.

Es ist eine Mehrzahl solcher paarweise einander zugeordneten Kontaktteile vorgesehen, wobei im Ausführungsbeispiel zwei Reihen von jeweils einander zugeordneten Kontaktteilen 4, 6 gebildet sind. Die beiden Reihen sind gegeneinander versetzt angeordnet. Das Kontaktteil 6 eines Kontaktpaares hat ein als Schneidklemme ausgebildetes Anschlußelement 5, das durch eine entsprechende Öffnung 21 an der Vorderseite 12 der Verteilerleiste herausragt. Die an dieser Bedienungsseite an diese Anschlußelemente 5 angeschlossenen Leitungen sind Rangierdrähte, die z. B. zu den Teilnehmern führen. Diese Anschlüsse sind also nach dem Einbau der Anschlußleisten für Verdrahtungsänderungen leicht zugänglich. Das Kontaktteil 6 weist ebenfalls ein als Schneidklemme ausgebildetes Anschußelement 7 auf, das gegenüber dem Anschlußelement 5 einfacher ausgebildet sein kann. Dieses Anschlußelement ist nach unten aus dem Kontaktteilgehäuse 3 über die Durchtrittsöffnung 22 herausgeführt. An diese sich an der Rückseite der Verteilerleiste befindlichen Anschlußelemente 7 werden beispielsweise die systemseitigen aus Kabeln ankommenden Leitungen 14 herangeführt. Diese Leitungen können beispielsweise mittels des angedeuteten Druckstückes 16 fixiert werden. Der durch die beiden Gehäuseteile nach ihrem Zusammenfügen gebildete Raum 29 nimmt z. B. die Rangierdrähte auf.

Das Kontaktteil 6 weist einen stiftförmigen Ansatz 8 auf, der gewissermaßen als Messerkontakt durch eine Öffnung 9 hindurchtritt und von der Bedienungsseite 12 her zugänglich ist. Mit einem entsprechenden aufsteckbaren Gegenkontakt kann dann eine Verbindung zu einem aufgesetzten Bauteil damit hergestellt werden. Die freien Enden der Kontaktteile 4 und 6 sind mit Kontaktpolen 10 versehen. Dieser damit gebildete Trennkontakt kann jeweils durch über entsprechende Durchlaßöffnungen eingeführte Trennelemente aufgetrennt werden. Aus Öffnungen 19 können weitere stiftartige Ansätze 18 hindurchtreten, die Teile eines Erdungsbleches 17 darstellen. Diese Erdungsblech kann z. B. an einem Ansatz 25 aufliegen und es kann mit dem entsprechend ausgebildeten Endbereich des Trägerteils 28 durch Verschrauben eine Erdpotential-Anschaltung vorgenommen werden.

Im Ausführungsbeispiel sind die als Schneidklemmen ausgebildeten Anschlußelemente der Kontaktteile nach oben bzw. nach unten aus dem Kontaktteilgehäuse 3 herausgeführt. Grundsätzlich können diese Anschlußelemente auch nur in einer Richtung beispielsweise an der Oberseite des Kontaktteilgehäuses aus diesem herausgeführt sein.

Mit dem jeweiligen Anschlußelement wird ein Kontakt zwischen diesem und einem herangeführten Leitungsdraht 15 bzw. 14 ohne zusätzliche Kontaktierungsmaßnahmen, nur durch Eindrücken des Leitungsdrahtes, mit Hilfe eines Werkzeuges, erreicht.

Jede Verteilerleiste 1 wird durch die mechanische Verbindung des Unterteilgehäuses 2 mit dem die Kontaktteile 4, 6 beinhaltenden Kontaktteilgehäuse 3 gebildet. Diese mechanische Verbindung erfolgt durch Rasthaken 23 in Verbindung mit Führungselementen 26, 27. Diese Führungselemente sind an den senkrecht zur Längsrichtung der Verteilerleiste und senkrecht zur Bodenplatte ausgerichteten stirnseitigen Wandteilen 25 bzw. der Trennwand 32 des Unterteilgehäuses 2 vorgesehen. Der Abstand dieser Wandflächen voneinander entspricht der Längenabmessung eines Unterteilgehäuses. Im Ausführungsbeispiel werden in ein Unterteilgehäuse insgesamt zwei Kontaktteilgehäuse eingesetzt. Um dies zu ermöglichen, ist im entsprechenden Abstand von den außen liegenden Wandteilen 25 die Trennwand 32 vorhanden.

Wie insbesondere aus der Figur 2 zu entnehmen ist, bestehen im Ausführungsbeispiel die Führungselemente aus einem an jeder dieser genannten Wände innenseitig vorhandenen Rippen. Diese Rippen 26 greifen beim Zusammenfügen der beiden Gehäuseteile in die entsprechenden Ausschnitte 27 ein. Diese Ausschnitte befinden sich auf der einer Stirnseite des Kontaktteilgehäuses 2, die der genannten Wandteile jeweils zugewandt ist. Wie insbesondere der Figur 3 zu entnehmen ist, reichen diese Führungsrippen 26 bis zur Bodenplatte 33 des Unterteilgehäuses 2. Im unmittelbaren Bereich dieser Bodenplatte weist diese Führungsrippe 26 nahezu das exakte auf den Ausschnitt bezogene Maß auf, während für den oberen Bereich eine sogenannte Ausformschräge vorgesehen ist. Dadurch wird das Zusammenfügen der beiden Gehäuseteile erleichtert, da das Kontaktteilgehäuse 3 mit den an ihm vorhandenen Ausschnitten 27 unproblematisch an diese Führungsrippen herangeführt und nach dem Aufsetzen eingeschoben werden kann. Die eigentliche Verbindung zwischen den beiden Gehäuseteilen 2, 3 wird durch die innenseitig an der Bodenfläche 33 des Unterteilgehäuses 2 vorhandenen Rasthaken 23 bewirkt. In der Längsrichtung des Unterteilgehäuses sind diese Rasthaken jeweils in einem bestimmten Abstand voneinander mehrfach vorgesehen, wie aus Figur 2 zu erkennen ist. Beim Aufschieben des Kontaktteilgehäuses 2, das durch die mit Hilfe der im allgemeinen als Nut und Feder bezeichneten Führungselemente 26, 27 bewirkten Vorzentrierung erleichtert wird, werden die gefederten Rastnasen der Rasthaken 23 seitlich durch die am Partnerelement 24 vorgesehene Auflaufschräge seitlich weggedrückt. Diese Rastnasen hintergreifen nach dem endgültigen Aufsetzen des Kontaktteilgehäuses auf der Bodenfläche 33 die als Partnerelemente für die Rastnasen vorhandenen Ansätze 24 des Kontaktteilgehäuses 3. Diese Rastverbindung mit Hilfe der Rasthaken kann aufgrund der Richtungsfixierung bei der Schiebebewegung problemlos vorgenommen werden. Neben der durch diese Führungselemente erreichten Vorzentrierung wird gleichzeitig eine zusätzliche Haltefunktion erfüllt. Dies ist insbesondere deshalb von Bedeutung, da die Rasthaken nur auf einer Längsseite, nämlich auf der Innenseite vorgesehen sind. Neben der Ausgestaltung und Anordnung der Kontaktteile trägt diese einseitige Anordnung der Rasthaken dazu bei, daß die Verteilerleiste besonders schmal ausgebildet werden kann. Dies bedeutet, daß sehr viel mehr Leisten nebeneinander montiert werden können.

**Patentansprüche**

1. Verteilerleiste zur Verbindung von Leitungsadern in Kommunikationsanlagen, insbesondere in Nebenstellenanlagen, die aus einem Unterteilgehäuse (2) und aus einem mit ihm mechanisch verbundenen Kontaktteilgehäuse (3), in dem die jeweils aus getrennten Kontaktteilen (4,6) bestehenden Schalt- und/oder Trennkontakte in entsprechenden Kammern (30,31) in zumindest einer reihenförmigen Anordnung eingebracht sind, zusammengefügt ist, **dadurch gekennzeichnet,** daß bei einer mit Hilfe von mehreren in mindestens einer Reihe in Längsrichtung angeordneten Rastelementen (23), - die beim Zusammenfügen von Unterteilgehäuse (2) und Kontaktteilgehäuse (3) mit entsprechenden, am jeweils anderen Teil vorgesehen Partnerelementen (24) verrasten - erfolgenden mechanischen Verbindung das Unterteilgehäuse (2) in einem der Länge des Kontakteilgehäuses (3) entsprechenden Abstand senkrecht zur Längsrichtung verlaufende stirnseitige Begrenzungswandflächen (26, 32) aufweist, an denen einstückig mit ihnen verbundene und sich in Zusammenfügungsrichtung erstreckende Führungselemente (26) vorhanden sind, daß an den stirnseitigen Begrenzungswandflächen des Kontaktteilgehäuses selbst jeweils die an diese Führungselemente (26) angepaßte Gegenform (27) vorgesehen ist, daß das jeweils mit der Gegenform (27) in Eingriff gebrachte Führungselement (26) bei der zum Zwecke des Zusammenfügens vorgenommen relativen Verschiebebewegung der beiden Gehäuseteile (2, 3) zueinander eine gesicherte Lage des Kontaktteilgehäuses bezüglich der Rastelemente bewirkt.

2. Verteilerleiste nach Anspruch 1,
**dadurch gekennzeichnet,** daß die Rastelemente als am Unterteilgehäuse (2) ausschließlich an einer Längsseite vorhandene Rasthaken (23) ausgebildet sind, daß diese in der Endlage des Kontaktteilgehäuses mit einer gefederten Rastnase einen entsprechenden Ansatz (24) des Kontaktteilgeäuses hintergreifen.

3. Verteilerleiste nach Anspruch 1,
**dadurch gekennzeichnet,** daß als Führungselemente bis zur Bodenfläche des Unterteilgehäuses verlaufende und senkrecht zu ihr ausgerichtete Rippen (26) vorgesehen sind, daß an der jeweils einer Rippe zugewandten Begrenzungswandfläche des Kontaktteilgehäuses (3) als Gegenform ein daran angepaßter Ausschnitt (27) vorgesehen ist.

4. Verteilerleiste nach Anspruch 3,
**dadurch gekennzeichnet,** daß die Rippen und in gleicher Weise die daran angepaßten Ausschnitte, an den sich gegenüberliegenden Begrenzungswandflächen (25, 32) seitlich gegeneinander versetzt, angeordnet sind.

FIG 1

# FIG 3

# FIG 2

**Europäisches**
**Patentamt**

# EUROPÄISCHER
# RECHERCHENBERICHT

Nummer der Anmeldung

# EP 91 11 5292

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-B-2 658 296 (SIEMENS)<br>* Das ganze Dokument *<br>– – – | 1-4 | H 04 Q 1/14 |
| Y | DE-A-2 657 312 (SIEMENS, ITALY)<br>* Seite 8, Zeilen 26-32; Abbildungen 6,7 *<br>– – – | 1-4 | |
| Y | DE-A-1 810 175 (KRONE)<br>* Seite 3, Zeilen 3-27; Abbildungen 2,3 *<br>– – – | 1-4 | |
| P,X | DE-U-9 013 644 (SIEMENS)<br>* Seite 5, Zeile 31 - Seite 6, Zeile 10; Abbildungen 1-3 *<br>– – – – – | 1-4 | |
| | | | **RECHERCHIERTE SACHGEBIETE (Int. Cl.5)**<br><br>H 04 Q<br>H 05 K |

Der vorliegende Recherchenbericht wurde für alle Patentansprüche erstellt

| Recherchenort | Abschlußdatum der Recherche | Prüfer |
|---|---|---|
| Den Haag | 11 Dezember 91 | LUND M. |